# EUROPÄISCHE PATENTSCHRIFT

(11) **EP 2 246 948 B1**
(45) Veröffentlichungstag und Bekanntmachung des Hinweises auf die Patenterteilung: **23.09.2015**
(21) Anmeldenummer: 10004541.8
(22) Anmeldetag: 29.04.2010
(51) Int. Cl.: H02G 3/04

(54) **Anordnung zur Magnetfeldkompensation bei Starkstromkabeln**
Assembly for compensating for magnetic fields in high power cables
Agencement de compensation de champ magnétique dans des câbles à courant fort

(30) Priorität: 02.05.2009 DE 102009019797
(43) Veröffentlichungstag der Anmeldung: 03.11.2010
(73) Patentinhaber: nkt cables GmbH & Co. KG, 51061 Köln (DE)
(72) Erfinder: May, Hans-Peter, DE 51467 Bergisch Gladbach (DE)

(56) Entgegenhaltungen:
- DE-U1-202006 016 804
- MAIOLI P ET AL: "PASSIVE LOOPS TECHNIQUE FOR ELECTROMAGNETIC FIELDS MITIGATION: APPLICATIONS AND THEORETICAL CONSIDERATIONS", INTERNET CITATION, 1. Juni 2007 (2007-06-01), Seiten 1-6, XP002616188, Gefunden im Internet: URL:http://www.jicable.org/2007/Actes/Sess ion_A8/JIC07_A84.pdf [gefunden am 2011-12-10]

## Beschreibung

Die Erfindung betrifft eine Anordnung zur Magnetfeldkompensation bei Starkstromkabeln für Wechselstrom.

In zunehmendem Maße wird bei der Installation von Starkstromkabeln die Forderung erhoben, niederfrequente äußere Magnetfelder abzuschirmen.

Eine magnetische Abschirmung von erdverlegten Drehstromkabeln kann dadurch erreicht werden, dass man die drei Adern des Kabelsystems in ein Rohr aus hochpermeablem Material einzieht, beispielsweise in ein handelsübliches Stahlrohr. Nachteil eines Stahlrohres zur Abschirmung ist die Tatsache, dass es einerseits aus mechanischen Gründen und zum Zweck der Abschirmung eine große Wanddicke von einigen Millimetern (etwa 4...10 mm) aufweisen muss und dass es andererseits dadurch nicht flexibel ist und in kurzen Rohrabschnitten zusammengeschweißt werden muss. Zudem muss es gegen Korrosion durch die Bodenfeuchte dadurch geschützt werden, dass es außen mit einem Kunststoffmantel und innen meist mit einer Auffüllung aus Beton versehen wird. Eine weitere arbeitstechnische Schwierigkeit besteht darin, dass aus verlegetechnischen Gründen zunächst zusätzlich drei Kunststoffrohre in das Stahlrohr einzuziehen sind, in die anschließend die drei Kabeladern einzeln eingezogen werden können.

Bei einem Kabel für ein Drehstromsystem, in dem kein Nullstrom geführt wird, ist schon vorgeschlagen worden, die Kabeladern gemeinsam mit einer Wicklung eines Bandes aus magnetisch hochpermeablem Material zu umgeben und darüber eine Kabelarmierung anzubringen (DE 202006016804 U1). Eine ähnliche Konstruktion, bei der Drehstromkabel in abschirmende Rohre einzuziehen sind, ist in der DE 202007 007507 Ul beschrieben. Allerdings müssen solche magnetischen Abschirnikonstruktionen in Muffenbereichen oder anderen örtlich begrenzten Abschnitten unterbrochen werden, wodurch sich die Abschirmwirkung verschlechtert. Daher müssen in solchen Unterbrechungsstellen zusätzliche Schirmungsmaßnahmen vorgenommen werden.

In der Kabeltechnik sind schon Abschirmmäntel bekannt geworden, welche aus mindestens einer Lage von auf ein Kabel aufgewickelte weichmagnetische Materialstreifen bestehen (DE 19807527 A1, DE 3123040 A1, DE 1440008 A1, EP 0290343 B1). Solche Konstruktionen sind für die unmittelbare Herstellung eines Kabels vorgesehen. Die Anordnungen sind nicht geeignet für die nachträgliche Anbringung an oder über ein Kabel während der Kabelmontage, insbesondere wenn das Kabel in einem Kabelgraben liegt.

Zur Verringerung der Magnetfelder in der Umgebung von Hochspannungskabeln können Kompensationsleiter eingesetzt werden. Diese werden über eine gewisse Länge parallel zu den Kabeln gelegt und an ihren Enden miteinander kurzgeschlossen (sog. "passive loops"), so dass die Kabelströme in diese Leiter hinein kompensierende Ströme induzieren. Beispielsweise ist eine solche Anordnung in der EP 1598911 A1 für ein Starkstromkabel (mit mindestens zwei Phasenleitern) beschrieben worden. Hierbei ist mindestens ein erster Kompensationsleiter entlang einem ersten Phasenleiter installiert, und mindestens ein zweiter Kompensationsleiter unabhängig von dem ersten Kompensationsleiter entlang eines zweiten Phasenleiters installiert ist. Der mindestens eine erste Kompensationsleiter und der mindestens eine zweite Kompensationsleiter sind danach mindestens an einem Anfangsabschnitt und an einem Endabschnitt überbrückt, um einen geschlossenen Stromkreis zwischen den beiden Kompensationsleitern zu bilden. In der Anordnung der EP 1598911 A1 werden plattenförmige Kompensationsleiter vorgeschlagen. Man kann jedoch auch bei der "passive loop"-Konstruktion den einen plattenförmigen Leiter durch mehrere parallele Kompensationsleiter ersetzen.

Eine solche Kompensationsmaßnahme ist insbesondere für die Muffenbereiche von Bedeutung, da dort die Kabel aus montagetechnischen Gründen mit besonders großem Abstand - meist in einer Ebene - liegen und damit besonders große Magnetfelder hervorrufen. Der Aufwand zur Einhaltung von Magnetfeldrestriktionen kann erheblich sein, wie in eigenen Untersuchungen ermittelt. Dabei besteht einerseits das Bestreben, die Kompensationsleiter in möglichst großem Abstand zu den Kabeln zu führen, um die Kompensationsleiterverluste und die thermischen Beeinflussungen gering zu halten. Andererseits ist man oft gezwungen, die Kompensationsleiter möglichst dicht bei den Kabeln zu positionieren, damit die erforderlichen Kompensationsströme überhaupt induziert werden.

Es ist die Aufgabe der Erfindung, eine Anordnung mit begrenzter Länge zur magnetischen Abschirmung bei Starkstromkabeln vorzuschlagen, die einfach herstellbar ist, die für besonders kritische Abschirmpositionen geeignet ist und die auch bei der Kabelmontage an Muffenverbindungen oder in Durchführungen einfach einsetzbar ist.

Die Erfindung wird auf einem begrenzten Längenabschnitt entlang eines Wechselstrom-Starkstromkabels eingesetzt, wobei je Phasenleiter Abschirmmittel der als Hohlzylinder ausgebildeten Abschirmanordnung vorhanden sind, und der Hohlzylinder die Länge des Längenabschnitts aufweist. Die Abschirmmittel umfassen weiterhin mindestens einen Hinleiter und mindestens einen Rückleiter, die entlang jedem der Phasenleiter des Starkstromkabels liegen. Jeder der Phasenleiter ist abschnittsweise auf der Länge des Hohlzylinders mit einer Bebänderung aus hochpermeablem Material umhüllt. Der Hohlzylinder mit Bebänderung soll im folgenden auch als Induktionsrohr bezeichnet werden. Aufbau und Material einer hochpermeablen Bebänderungen sind beispielsweise aus der DE 102006013553 A1 bekannt. Die Bebänderung ist in einer Wandung des Hohlzylinders eingebracht, wobei in dem Holzylinder mindestens ein Hinleiter verläuft.

Neben dem mindestens einen Hinleiter ist noch mindestens ein (weiterer) Rückleiter vorhanden. Der mindestens eine Rückleiter kann parallel zu jedem Phasenleiter oberhalb oder ebenfalls unterhalb der Bebänderung liegen. Außerhalb des Hohlzylinders - weiterhin parallel zu jedem Phasenleiter - mit einer Länge größer als die Länge des Hohlzylinders liegt weiterhin parallel zu jedem Phasenleiter mindestens ein Kompensationsleiter, und mindestens ein Hinleiter ist über mindestens einen Kompensationsleiter mit mindestens einem Rückleiter in Reihe gelegt, so dass eine geschlossenen Kurzschluss-Leiterschleife gebildet ist. Es können auch unter Einbeziehung mehrerer Hin- und Rückleiter und Kompensationsleiter mehrere Kurzschluss-Leiterschleifen parallel zueinander verschaltet werden.

Die Leiterverbindungen zwischen den Leitern, die über endseitige Anschlusskontakte an Hin- und Rückleiter oder auch als Festverbindungen hergestellt sein können, beispielsweise durch Verschweißung, werden außerhalb des Längenabschnitts des Induktionsrohrs vorgenommen. Die Leiterschleife kann im einfachsten Fall aus einer Windung bestehen. Werden mehrere Hin- und Rückleiter in die Leiterschleife einbezogen, entstehen Leiterschleifen mit mehreren Windungen, wobei die Bebänderung mindestens einmal umschlungen wird. Der Aufbau mit hochpermeabler Bebänderung sorgt für eine Verstärkung des in der oder den Leiterschleife(n) induzierten und als Kompensation wirkenden Stromes.

Die Anordnung kann direkt in Erde liegen. Sie ist nicht auf Muffenbereiche beschränkt: auch bei Kompensationsleitern entlang der gesamten Kabelstrecke können solche Induktionsrohre in bestimmten Abständen installiert werden, um die Kompensationsströme zu erhöhen. Schließlich besteht auch die Möglichkeit, das Induktionsrohr über größere Längen in sensiblen Bereichen einer Trasse als Verlegerohr für Einleiterkabel auszulegen. Diese Maßnahme ist besonders auch bei Verlegung in Stahlrohren interessant.

Weitere Ausführungsformen, die einzeln oder in Kombination miteinander realisiert sein können, werden im Folgenden formuliert.

Auf einem Trägerrohr aus Kunststoff, welches auch zur leichteren Verlegbarkeit flexibel (beispielsweise als Wellrohr) ausgebildet sein kann, kann der eine Hinleiter, zumindest abschnittsweise als Metallarmierung ausgebildet sein. Die Metallarmierung kann auch als Rohr ausgebildet sein. An beiden Enden der Metallarmierung, bzw. des Metallrohrs sind wiederum Kontaktstellen zur Verbindung mit dem Kompensationsleiter, bzw. mit dem Rückleiter vorhanden, ebenfalls zur Bildung einer Leiterschleife.

Mehrere auf einem Kunststoffrohr aufgebrachte Leiter (Hin- und Rückleiter) sollen gegeneinander isoliert ausgebildet sein, wobei diese Leiter parallel oder verseilt auf dem Kunststoff Trägerrohr liegen können. Diese Leiter sind somit (zumindest abschnittsweise) wie Elektrokabel ausgebildet - das heißt als elektrischer Leiter mit Kunststoffisolierung.

Über mindestens einen Kompensationsleiter kann ein, mechanisch in seiner Impedanz verstellbarer hochpermeabler Magnetkern aufgeschoben sein.

Das Induktionsrohr sollte mit einem außenliegenden Korrosionsschutz umhüllt sein, wobei insbesondere die hochpermeable Bebänderung gegen Korrosion geschützt ist.

Um das Induktionsrohr kann ein Wärmeableiter herumgelegt sein. Der Wärmeableiter kann aus einem Metallrohr bestehen, oder er kann aus hochwärmeleitfähigem Zement bestehen. Zu der letzteren Alternative kann auf DE 102007026648 B3 verwiesen werden.

Die Erfindung wird in mehreren Ausfährungsformen in Figuren wieder gegeben, welche im einzelnen zeigen:
- Fig. 1A und 1B:: ein erstes Induktionsrohr der Kompensationsanordnung (Längs- und Querschnitt),
- Fig. 2A und 2B:: eine Variante der ersten Anordnung,
- Fig. 3:: Induktionsrohr mit hochwärmeleitfähigem Spezialbeton verfüllt, und außen ebenfalls mit Spezialbeton umgeben,
- Fig. 4:: ein Induktionsrohr mit außenliegendem Metallrohr als Wänneableitelement,
- Fig. 5A und 5B:: zwei Schaltungen mit Kompensationsleitern zur Bildung einer Kurzschluss-Leiterschleife,
- Fig. 6:: ein Magnetkern zur Steuerung der Induktion,
- Fig. 7:: ein Beispiel einer Kabelverlegung mit Einleiterkabeln in Einebenenanordnung und
- Fig. 8:: eine Anordnung mit Metallarmierung auf einem Trägerrohr.

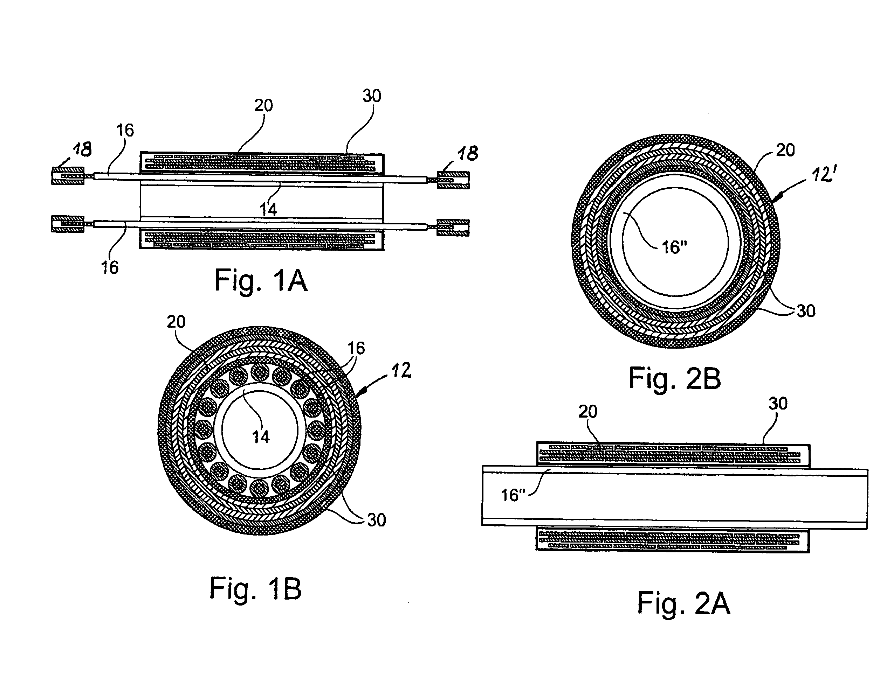

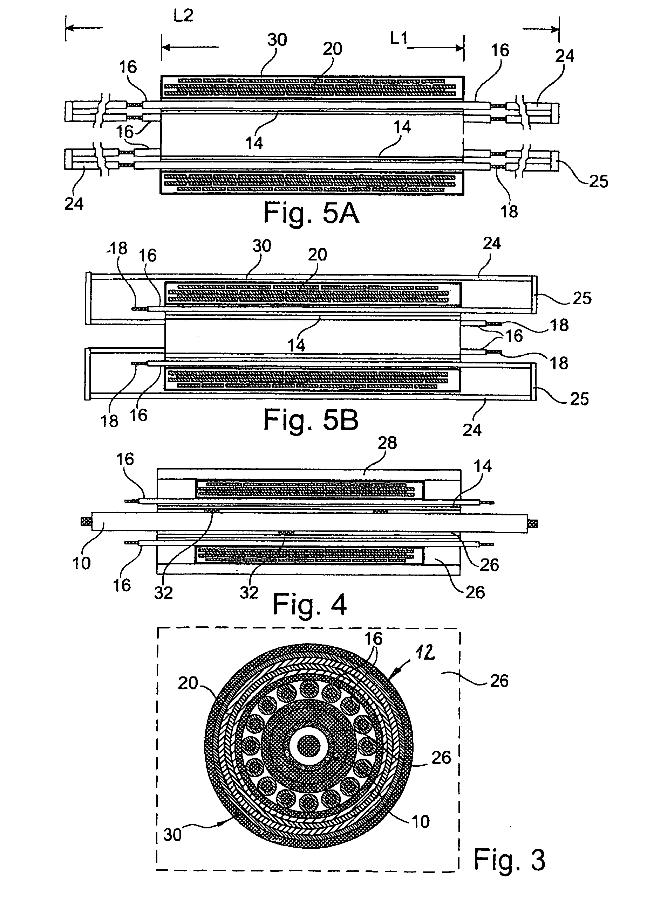

Mit den Figuren wird eine Kompensations- oder Abschirmanordnung vorgestellt, bei der ein Hohlzylinder 12, 12', 12" (das "Induktionsrohr") eingesetzt wird, so dass jeweils eine Anordnung für eine spezielle Verlegesituation mit begrenzter Länge zur Verfügung steht. Die Anordnung benötigt keine massiven Eisenkerne und eignet sich auch für die direkte Erdverlegung von Muffen. So wird in Fig. 1A und 1B ein Induktionsrohr (Länge L1 etwa 0,5 m bis 2 m) dargestellt, das vor der Muffenmontage jeweils auf eine - nicht gezeichnete - Kabelader (Phasenleiter 10) geschoben wird. Dieses Induktionsrohr besteht aus einem innenliegenden Trägerrohr 14. Auf das Trägerrohr 14 werden - parallel oder verseilt - einer oder mehrere (isolierte) Leiter 16 aufgebracht, die an ihren Enden mit Anschlusskontakten 18 versehen sind. Die Leiter sind jeweils Hin- und Rückleiter in einer mit einem Kompensationsleiter gebildeten Kurzschluss-Leiterschleife. Der Hohlzylinder wird nun mit mehreren Lagen des auch bei "Stadtkabeln" eingesetzten hochpermeablen Elektrobandes 20 umwickelt. Eine geeignete Umhüllung mit Schrumpfschläuchen oder ähnlichem sorgt für den Korrosionsschutz 30 dieser Anordnung. Es sollte dafür gesorgt werden, dass der Phasenleiter 10 koaxial in der Längsachse des Induktionsrohrs liegt, was durch Abstandshalter 32 (vgl. Fig. 4) unschwer zu realisieren ist.

Gemäß Fig. 1B sind sechszehn Leiter (an denen endseitige Anschlusskontakte 18 angebracht sein können) vorhanden, von denen acht als Hinleiter (16) und acht als Rückleiter (16) verschaltet werden können. Eine Kurzschluss-Leiterschleife 25 zur Magnetfeldkompensation wird dadurch erzeugt, dass - ausgehend von einem ersten Hinleiter - ein Kompensationsleiter 24 parallel zum Phasenleiter mindestens über einen kritischen oder empfindlichen Bereich (L2) hinaus, in dem die Magnetfeldkompensation vorgenommen werden soll, mit dem (mindestens ersten) Hinleiter 16 im Induktionsrohr in Reihe gelegt wird und der Kompensationsleiter 24 in einer Kurzschluss-Leiterschleife (mit mindestens einer Windung) zurück zu einem Rückleiter zurückgeführt wird (vgl. Fig. 5). Die Erstreckung der Kurzschluss-Leiterschleife 24, 25 außerhalb der rohrförmigen Anordnung verläuft in einer Länge L2 (vgl. Fig. 5), in der die magnetische Schirmung vorzunehmen ist (beispielsweise entsprechend der Länge einer Muffe). Nach dem Beispiel von Fig. 1 können acht Leiterschleifen mit je acht Kompensationsleitem gebildet werden, oder es können mehrere Hin- und Rückleiter als Windungen benutzt werden, so dass weniger Leiterschleifen jedoch mit einer Mehrzahl an Windungen herstellbar sind.

Eine Ausführungsvariante zeigt Fig. 2A und 2B. Hier wird anstelle des Trägerrohres 14 in Fig. 1 ein leitfähiges Rohr 16", beispielsweise aus Aluminium, vorgesehen. Das metallene Trägerrohr bildet zugleich einen einzigen (Hin-)Leiter 16" im Induktionsrohr. Der übrige Aufbau entspricht der Fig. 1, wobei Rückleiter außerhalb der Bebänderung geführt werden, siehe Darstellung in Fig. 5B.

Ergänzend kann eine Ausführungsform angedacht werden, bei der die Anordnungen nach Fig. 1 (und Fig. 5) längsgeschlitzt, also in Form zweier Halbzylinder konstruiert werden können. In diesem Fall müsste das Induktionsrohr nicht auf die Kabelader aufgeschoben werden, sondern könnte auch nach der Muffenmontage von außen aufgesetzt werden. Um den Magnetfluss nicht unzulässig zu verringern, müssten hierbei aber Überlappungsbereiche der magnetischen Bebänderung realisiert werden.

Die Fig. 3 zeigt - wie in Fig. 1 - eine Anordnung, bei der jedoch das Trägerrohr 14 mit hochwärmeleitfähigem Spezialbeton 26 verfüllt ist. Außen ist die Anordnung mit einem Block desselben Materials 26 umgeben. Die in der magnetischen Bebänderung 20 entstehenden Verluste sind erfahrungsgemäß gering. Um auch die zusätzlichen Verluste der Kompensationsleiter gut abführen zu können, wird vorgeschlagen, den Innenraum zwischen Phasenleiter 10 und Trägerrohr 14 mit dem hochwärmeleitfähigen Zement (λ ≈ 4...6 W/(K m)) der Firma Heidelberg Zement zu füllen. Auch der Außenraum der Anordnung kann, wie in Fig. 3 dargestellt, mit diesem Material verfüllt werden, so dass die zusätzlich entstehenden Verluste problemlos nach außen abgeführt werden können.

Um die Wärmeabfuhr weiter zu verbessern, und gegebenenfalls auch als Korrosionsschutz des Induktionsrohrs, wird vorgeschlagen und in der Fig. 4 gezeigt, das Induktionsrohrs nach außen hin mit einem dickwandigen Metallrohr 28, z.B. aus Aluminium oder Kupfer, zu umhüllen, um über dieses Rohr eine Wärmeabfuhr in Längsrichtung zu forcieren. Im Endenbereich dieses Metallrohres 28 könnten zusätzliche Kühlfahnen o.ä. für eine weiter verbesserte Wärmeabfuhr sorgen. Der Innenraum dieses Metallrohres sowie die Zwischenräume im Trägerrohr können wieder mit dem hochwärmeleitfähigen Spezialbeton 26 verfüllt werden.

In der Fig. 5A ist die Verlegung von Kompensationsleiterschleifen 24,25 an einem in Innern des Induktionsrohrs liegenden (jedoch nicht gezeichneten) Phasenleiters schematisch dargestellt. Über die Länge L1 des Induktionsrohrs hinaus sind bis zu einer Länge L2 zwei Kompensationsleiter 24 geführt, die mit den Hin- und Rückleitern 16 unter der Bebänderung 20 jeweils zu einer Windung in Reihe gelegt sind.

Die Fig. 5B zeigt eine Schaltung von insgesamt vier (Hin-)Leitern 16 unterhalb der Bebänderung und je einem Rückleiter oberhalb der Bebänderung 20, die mit den Kompensationsleitern 24 zu zwei Stromschleifen 25 mit jeweils zwei Windungen verschaltet sind. Enthält die Anordnung mehrere Leiter (wie schon erwähnt), so kann bei entsprechender Verbindung der Leiterenden eine Spule mit mehr als einer Windung zu einem Kompensationsleiterkreis 25 gebildet werden. Ob und für welche Anordnungen dies sinnvoll ist, ist eine Frage der Anlagengestaltung und muss fallweise bestimmt werden.

Je nach Anwendungsfall können auch alle je einem Phasenleiter zugeordnete Kompensationsleiterstromkreise (Leiterschleifen) an ihrem vom Induktionsrohr fernen Ende miteinander kurzgeschlossen werden.

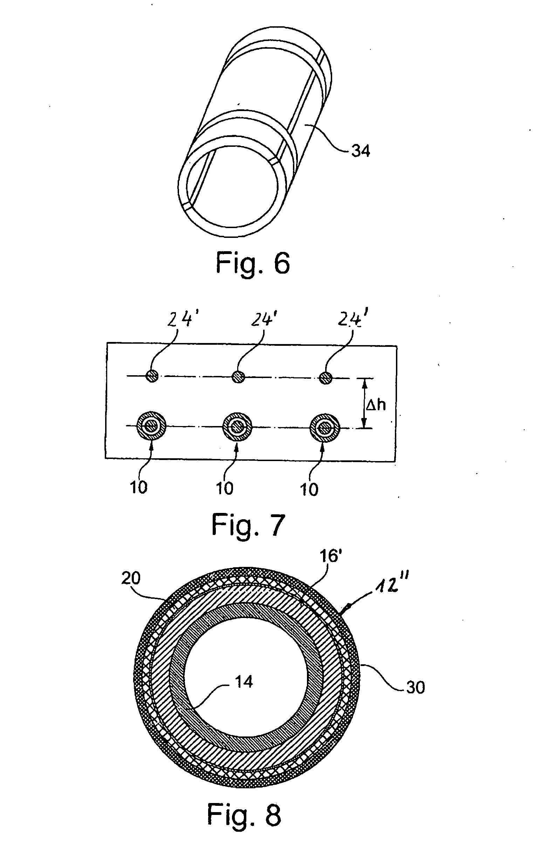

Bei den vorgeschlagenen Kompensationsanordnungen stellen sich Ströme in den angeschlossenen Kompensationsleitern ein, die je nach Positionierung dieser Kompensationsleiter nach Betrag und Phase nicht optimal sein müssen. Prinzipiell besteht jedoch die Möglichkeit der Beeinflussung dieser Ströme durch zusätzliche hochpermeable Kerne 34, dargestellt in Fig. 6. Hier ist eine längsgeschlitzte Ausführung eines hochpermeablen Magnetkerns abgebildet, der um einen Kompensationsleiter 24 herum angebracht wird. Die Kernhälften sind mit Abstandsplättchen von einander getrennt. Das Prinzip ist bekannt zur Stromeinstellung bei parallelen Kabeln, und wurde auf der CIRED-Conference, 2003, paper No. 57, session 1 vorgestellt.

Die Induktivität dieses Kerns kann einerseits mechanisch verstellt werden, indem die beiden Kernhälften gegeneinander in Längsrichtung verschoben werden, so dass die wirksame Eisenfläche verändert wird. Zudem kann diese Spule mit einer Wicklung versehen und beschaltet werden, beispielsweise mit einem Potentiometer, so dass eine einfache Verstellung der Impedanz möglich ist.

Fig. 7 zeigt eine Kabelverlegung mit Einleiterkabeln 10 in Einebenenanordnung. An diesem Beispiel soll die Wirksamkeit der erfindungsgemäßen Anordnung erläutert werden. Das System von Einleiterkabeln liegt in einer Einebenenanordnung (Achsabstand 0,7 m) in 1,5 m Tiefe und führt einen Strom von 1500 A. Die maximale magnetische Induktion an der Erdoberfläche wird hierbei: 132,7 µT. Drei Kompensationsleiter 24' (mit Kupferquerschnitt 3*1000 mm²) werden in einer Höhe Δ*h* oberhalb der Kabeladern 10 verlegt. Die Einleiterkabel haben keine weitere Abschirmmittel, beispielsweise keine Bebänderung wie nach der Erfindung.

Für ein Beispiel mit Annäherung der Kompensationsleiter auf eine Höhe von Δ*h* = 0,1 m ergibt sich folgendes: ohne Induktionsrohr stellen sich die Ströme in den drei Kompensationsleitern allein durch die Induktionswirkungen der Schleifen ein. Sie sind unsymmetrisch und liegen zwischen 697 A und 796 A. Die maximale magnetische Induktion beträgt hierbei 52,0 µT.

Wird nun durch erfindungsgemäße Induktionsrohre oder auch durch Umbauwandler erzwungen, dass in den Kompensationsleitern die vollen Rückströme (d.h. 1500 A) fließen, so reduziert sich die magnetische Induktion auf 15,7 µT.

Werden diese Kompensationsleiterströme hingegen durch Aufschieben von hochpermeablen Kernen nach Fig. 6 um rd. 9 % von 1500 A auf 1372 A reduziert, so verringern sich nicht nur die Verluste in den Kompensationsleitern um rd. 18 %, sondern die maximale magnetische Induktion wird um den Faktor drei reduziert auf 5,2 µT.

Zu Fig. 8: Prinzipiell kann man das erfmdungsgemäße Induktionsrohr auch lang gestalten, d.h. als Verlegerohr für Einleiterkabel auslegen. Auf ein flexibles Kunststoffrohr 14, das als Verlegerohr dienen soll, wird eine Metallarmierung 16' (aus Kupfer oder Aluminium) mit darüber liegender hochpermeabler Bebänderung und nach außen abschließendem Korrosionsschutz 30 aufgebracht.

Vorteil dieser in Fig. 8 dargestellten Anordnung ist, dass die vollen Leiterrückströme in den Metallarmierungen erzwungen werden, so dass das äußere Magnetfeld praktisch verschwindet; nachteilig hingegen, dass etwa die Leiterverluste in den Armierungen zusätzlich entstehen. Die Anordnung ist also für sensible Bereiche geeignet, in denen extrem hohe Schirmfaktoren gefordert werden.

Ein weiterer Anwendungsbereich ergibt sich dort, wo Phasenleiter in Stahlrohre eingezogen werden müssen, beispielsweise bei Bahnunterquerungen oder Dükern. Durch Einsatz dieser Induktionsrohre als Verlegerohre werden die Stahlrohrverluste unterdrückt. Hinzu kommt, dass es hierdurch auch möglich wird (was sonst wegen der extremen Stahlrohrverluste zur Zerstörung der Kabel führen würde), Kabel einphasig in Stahlrohre einzuziehen.

Wenn dies unter Korrosionsschutzaspekten möglich erscheint, können Kunststoffrohr und Armierung auch durch ein einziges Metallrohr, z.B. ein Aluminiumrohr, ersetzt werden. Um dieses flexibel zu halten, könnte es als Wellrohr ausgeführt werden.

### Bezugszeichen

- 10: Phasenleiter, Kabelader
- 12, 12', 12": Hohlzylinder, Induktionsrohr
- 14: Trägerrohr (Kunststoff, flexibel)
- 16: Leiter als isoliertes Kabel
- 16': Leiter als Metallarmierung
- 16": Leiter als Metallrohr
- 18: Anschlusskontakte
- 20: Bebänderung (hochpermeabel)
- 24, 24': Kompensationsleiter
- 25: Windung(en) eines Kompensationsleiterstromkreises
- 26: Zement (hochwärmeleitfahig)
- 28: Metallrohr
- 30: Korrosionsschutz
- 32: Abstandshalter
- 34: hochpermeabler Kern
- L1: Längenabschnitt (Länge Induktionsrohr)
- L2: Länge Kompensationsleiter

## Patentansprüche

1. Anordnung zur Magnetfeldabschirmung auf einem Längenabschnitt entlang eines Wechselstrom-Starkstromkabels, insbesondere eines erdverlegten Starkstromkabels mit mindestens zwei Phasenleitern (10), wobei je Phasenleiter (10) Abschirmittel der als Hohlzylinder (12, 12', 12") ausgebildeten Abschirmanordnung vorhanden sind, und der Hohlzylinder (12, 12', 12") die Länge des Längenabschnitts (L1) aufweist,
wobei jeder der Phasenleiter (10) abschnittsweise mit der Länge des Längenabschnitts (L1) auf dem Hohlzylinder (12, 12', 12") mit einer Bebänderung (20) aus hochpermeablem Material umhüllt ist, und die Bebänderung (20) in einer Wandung des Hohlzylinders (12, 12', 12") eingebracht ist,
**dadurch gekennzeichnet, dass**
• in dem Hohlzylinder (12, 12', 12") mindestens ein Hinleiter (16) verläuft, und
• mit einer Länge (L2) größer als die Länge (L1) des Hohlzylinders (12, 12', 12") außerhalb des Hohlzylinders weiterhin parallel zu jedem Phasenleiter (10) mindestens ein Kompensationsleiter (24) liegt, und
• mindestens ein Hinleiter (16) über den mindestens einen Kompensationsleiter (24) mit mindestens einem Rückleiter (16) in Reihe gelegt ist, so dass mindestens eine geschlossenen Kurzschluss-Leiterschleife (25) gebildet ist.

2. Anordnung zur Magnetfeldabschirmung nach Anspruch 1, **dadurch gekennzeichnet, dass** unter der Bebänderung (20) sowohl mindestens ein Hinleiter (16) als auch mindestens ein Rückleiter (16) verläuft.

3. Anordnung zur Magnetfeldabschirmung nach Anspruch 1, **dadurch gekennzeichnet, dass** der mindestens eine Hinleiter unter der Bebänderung (20) als metallisches Rohr (16") ausgebildet ist.

4. Anordnung zur Magnetfeldabschirmung nach Anspruch 1, **dadurch gekennzeichnet, dass** der mindestens eine Hinleiter unter der Bebänderung (20) als Metallarmierung (16') ausgebildet ist.

5. Anordnung zur Magnetfeldabschirmung nach Anspruch 1 oder 2, **dadurch gekennzeichnet, dass** die Hin- und Rückleiter als Elektrokabel (16) ausgebildet sind.

6. Anordnung zur Magnetfeldabschirmung nach einem der vorhergehenden Ansprüche, **dadurch gekennzeichnet, dass** der Hohlzylinder (12, 12',12") im Innern von einem nichtmetallischen Trägerrohr (14) gebildet ist.

7. Anordnung zur Magnetfeldabschirmung nach einem der vorhergehenden Ansprüche, **dadurch gekennzeichnet, dass** Hin- und Rückleiter (16) mit endseitigen Anschlusskontakten (18) versehen sind.

8. Anordnung zur Magnetfeldabschirmung nach einem der vorhergehenden Ansprüche, **dadurch gekennzeichnet, dass** auf mindestens einen Kompensationsleiter (24) ein in seiner Induktivität mechanisch verstellbarer hochpermeabler Magnetkern (34) aufgeschoben ist.

9. Anordnung zur Magnetfeldabschirmung nach Anspruch 8, **dadurch gekennzeichnet, dass** zur Verstellung der Impedanz des Magnetkerns (34) der Magnetkern mit einer Spule mit einer Wicklung versehen und beschaltet ist.

10. Anordnung zur Magnetfeldabschirmung nach einem der vorhergehenden Ansprüche, **dadurch gekennzeichnet, dass** die Abschirmanordnung auf dem Längenabschnitt (L1) mit einem Korrosionsschutz (30) umhüllt ist.

11. Anordnung zur Magnetfeldabschirmung nach einem der vorhergehenden Ansprüche, **dadurch gekennzeichnet, dass** um die Abschirmanordnung auf dem Längenabschnitt (L1) ein Wärmeableiter (26,28) herum gelegt ist.

12. Anordnung zur Magnetfeldabschirmung nach Anspruch 11, **dadurch gekennzeichnet, dass** der Wärmeableiter aus einem Metallrohr (28) besteht oder durch Einbettung mit hochwärmeleitfahigem Zement (26) hergestellt ist.

## Claims

1. Arrangement for magnetic field shielding on a longitudinal portion along an alternating current power cable, in particular an underground power cable having at least two phase conductors (10), wherein for each phase conductor (10) shielding means of the shielding arrangement which is constructed as a hollow cylinder (12, 12', 12") are provided, and the hollow cylinder (12, 12', 12") has the length of the longitudinal portion (L1),
wherein each of the phase conductors (10) is partially surrounded with the length of the longitudinal portion (L1) on the hollow cylinder (12, 12', 12") with a banding (20) of highly permeable material and the banding (20) is introduced in a wall of the hollow cylinder (12, 12', 12"),
**characterised in that**
• at least one outgoing conductor (16) extends in the hollow cylinder (12, 12', 12"), and
• with a length (L2) greater than the length (L1) of the hollow cylinder (12, 12', 12") at least one compensation conductor (24) is located outside the hollow cylinder in a state further parallel with each phase conductor (10), and
• at least one outgoing conductor (16) over the at least one compensation conductor (24) having at least one return conductor (16) is placed in series so that at least one closed short-circuit conductor loop (25) is formed.

2. Arrangement for magnetic field shielding according to claim 1, **characterised in that** both at least one outgoing conductor (16) and at least one return conductor (16) extend below the banding (20).

3. Arrangement for magnetic field shielding according to claim 1, **characterised in that** the at least one outgoing conductor is constructed below the banding (20) as a metal pipe (16").

4. Arrangement for magnetic field shielding according to claim 1, **characterised in that** the at least one outgoing conductor is constructed below the banding (20) as a metal reinforcement (16').

5. Arrangement for magnetic field shielding according to claim 1 or claim 2, **characterised in that** the outgoing and return conductor are constructed as electrical cables (16).

6. Arrangement for magnetic field shielding according to any one of the preceding claims, **characterised in that** the hollow cylinder (12, 12', 12") is formed at the inner side of a non-metal carrier tube (14).

7. Arrangement for magnetic field shielding according to any one of the preceding claims, **characterised in that** outgoing and return conductors (16) are provided with end-side connection contacts (18).

8. Arrangement for magnetic field shielding according to any one of the preceding claims, **characterised in that** a highly-permeable magnetic core (34) which can be mechanically adjusted in terms of its inductivity is fitted onto at least one compensation conductor (24).

9. Arrangement for magnetic field shielding according to claim 8, **characterised in that**, in order to adjust the impedance of the magnetic core (34), the magnetic core is provided with and connected to a coil having a winding.

10. Arrangement for magnetic field shielding according to any one of the preceding claims, **characterised in that** the shielding arrangement on the longitudinal portion (L1) is surrounded with a corrosion protection (30).

11. Arrangement for magnetic field shielding according to any one of the preceding claims, **characterised in that** a heat sink (26, 28) is placed around the shielding arrangement on the longitudinal portion (L1).

12. Arrangement for magnetic field shielding according to claim 11, **characterised in that** the heat sink is comprised of a metal pipe (28) or is produced by means of embedding with highly heat-conductive cement (26).

## Revendications

1. Assemblage de blindage magnétique sur un segment longitudinal le long d'un câble pour courants alternatifs forts, notamment d'un câble pour courants forts enterré comportant au moins deux conducteurs de phase (10), dans lequel sont présents, pour chaque conducteur de phase (10), des moyens de blindage de l'assemblage de blindage conçu sous la forme d'un cylindre creux (12, 12', 12"), et dans lequel le cylindre creux (12, 12', 12") présente la longueur dudit segment longitudinal (L1),
dans lequel chacun des conducteurs de phase (10) est gainé par sections sur la longueur du segment longitudinal (L1) sur le cylindre creux (12, 12', 12") au moyen d'un rubanage (20) en matière hautement perméable, et le rubanage (20) est appliqué dans une paroi du cylindre creux (12, 12', 12"), **caractérisé en ce que**
• au moins un conducteur aller (16) traverse le cylindre creux (12, 12', 12"), et
• au moins un conducteur de compensation (24) se trouve à l'extérieur du cylindre creux sur une longueur (L2) supérieure à la longueur (L1) du cylindre creux (12, 12', 12"), toujours en étant parallèle à chaque conducteur de phase (10), et
• dans lequel au moins un conducteur aller (16) est mis en série avec au moins un conducteur retour (16) par l'intermédiaire du au moins un conducteur de compensation (24) de manière à constituer au moins une boucle conductrice de court-circuit (25) fermée.

2. Assemblage de blindage magnétique selon la revendication 1, **caractérisé en ce qu'**il se trouve, sous le rubanage (20), au moins un conducteur aller (16) ainsi qu'au moins un conducteur retour (16).

3. Assemblage de blindage magnétique selon la revendication 1, **caractérisé en ce que** l'au moins un conducteur aller présent sous le rubanage (20) est conçu sous la forme d'un tube métallique (16").

4. Assemblage de blindage magnétique selon la revendication 1, **caractérisé en ce que** l'au moins un conducteur aller présent sous le rubanage (20) est conçu sous la forme d'une armature métallique (16').

5. Assemblage de blindage magnétique selon la revendication 1 ou 2, **caractérisé en ce que** les conducteurs aller et retour sont conçus sous la forme de câbles électriques (16).

6. Assemblage de blindage magnétique selon l'une quelconque des revendications précédentes, **caractérisé en ce que** le cylindre creux (12, 12',12") est constitué à l'intérieur d'un tuyau porteur non métallique (14).

7. Assemblage de blindage magnétique selon l'une quelconque des revendications précédentes, **caractérisé en ce que** les conducteurs aller et retour (16) sont pourvus de contacts de raccordement (18) terminaux.

8. Assemblage de blindage magnétique selon l'une quelconque des revendications précédentes, **caractérisé en ce qu'**un noyau magnétique (34) hautement perméable à inductance mécaniquement réglable est coulissé sur au moins un conducteur de compensation (24).

9. Assemblage de blindage magnétique selon la revendication 8, **caractérisé en ce que**, pour pouvoir régler l'impédance du noyau magnétique (34), ce dernier est pourvu d'une bobine présentant un enroulement et est connecté à celle-ci.

10. Assemblage de blindage magnétique selon l'une quelconque des revendications précédentes, **caractérisé en ce que** l'assemblage de blindage est gainé d'une protection anticorrosion (30) sur le segment longitudinal (L1).

11. Assemblage de blindage magnétique selon l'une quelconque des revendications précédentes, **caractérisé en ce qu'**un dissipateur de chaleur (26, 28) est disposé autour du dispositif de blindage sur le segment longitudinal (L1).

12. Assemblage de blindage magnétique selon la revendication 11, **caractérisé en ce que** le dissipateur de chaleur se compose d'un tube de métal (28) ou bien est produit par intégration avec du ciment (26) à haute conductivité thermique.
